# EUROPEAN PATENT SPECIFICATION

(11) **EP 2 660 005 B1**
(45) Date of publication and mention of the grant of the patent: **18.11.2015**
(21) Application number: 13156747.1
(22) Date of filing: 26.02.2013
(51) Int. Cl.: B24B 27/02, B24B 41/06, B24B 3/54, B24B 3/36

(54) **A knife jig assembly**
Messereinspannungsanordnung
Ensemble gabarit de couteau

(30) Priority: 03.05.2012 SE 1250445
(43) Date of publication of application: 06.11.2013
(73) Proprietor: Tormek AB, 711 34 Lindesberg (SE)
(72) Inventor: Persson, Håkan, 711 31 LINDESBERG (SE)
(74) Representative: Ström & Gulliksson AB

(56) References cited:
- EP-A1- 1 987 916
- EP-A2- 0 214 943
- WO-A1-97/33717
- WO-A1-2007/113510
- WO-A2-2007/098470
- US-A- 5 191 737

## Description

### Technical Field

The present invention relates to a knife jig assembly for use in sharpening a knife in a grinding machine, comprising a conventional knife jig with a clamp for clamping and holding an object.

### Background of the Invention

The use of a knife jig at the sharpening of a knife in a grinding machine with a rotating grindstone is conventional. The jig has a clamp for holding the knife, and the jig may be manually operated during the sharpening process, preferably supported by a rod-shaped universal support of the grinding machine.

A problem with such a knife jig relates to the dimensions of the knife blade to be held by the clamp. The blade must normally have a length of some 60 mm and width of some 14 mm to be properly held by the clamp and satisfactorily sharpened by the grinding machine.

Small woodcarving knifes are normally very difficult to mount parallelly, so that an equally large grind bevel is obtained at both sides. The reason is that the blade is only parallel over a very small area close to the handle.

The main object of the invention is to increase the versatility of the knife jig, so that it can be used for a broader range of dimensions and shapes of the knives to be sharpened.

### The Invention

This object is according to the invention attained by the addition to the knife jig of a knife holder with means for holding the knife and with a flat rod to be clamped by the clamp of the knife jig. The result is a knife jig assembly comprising the conventional knife jig and the inventive knife holder having a flat rod, which can be simply and securely held by the knife jig clamp. The operation of the knife jig assembly at sharpening is very similar to the operation of the knife jig alone.

The means for holding the knife may preferably be two pairs of open jaws attached to the flat rod and a closed-loop yoke between the jaws, the yoke being movable for engaging the knife.

Surfaces of the jaws intended for cooperation with the handle of the knife may preferably be concave in all directions, which means that the knife handle bears against four points of the jaws.

In a threaded hole the yoke may be provided with a screw for engagement with the flat rod.

### Brief Description of the Drawings

The invention will be described in more detail below under reference to the accompanying drawings, in which
Fig 1 is an isometric view of a knife holder to be used together with a knife jig to form a knife jig assembly according to the invention,
Fig 2 is an isometric view of the knife holder holding a knife,
Fig 3 is an isometric view of the knife holder holding the knife and held by a knife jig, and
Fig 4 is an illustration of the sharpening of a knife in a grinding machine by means of a knife jig assembly according to the invention.

### Detailed Description

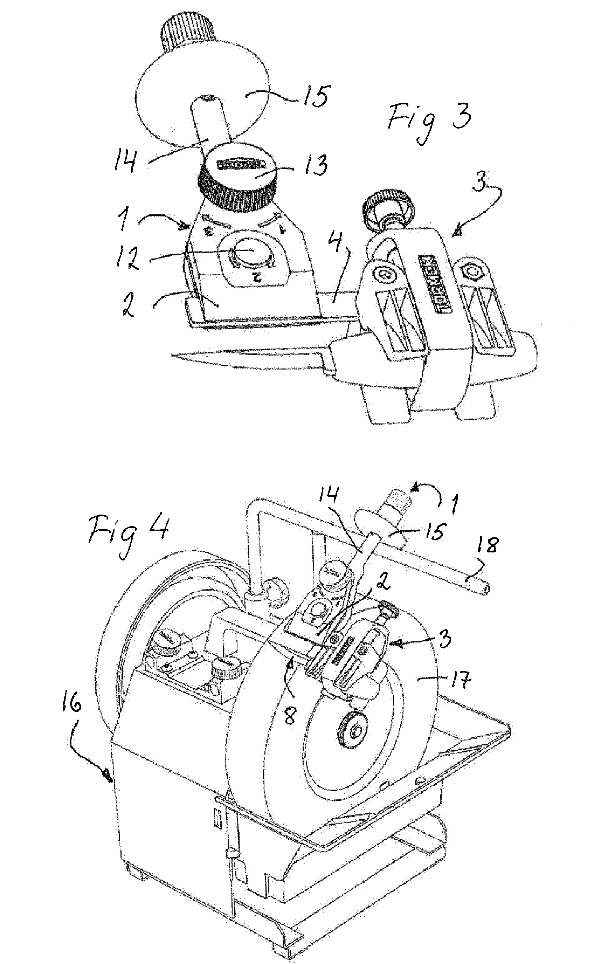

A conventional knife jig 1 for knife sharpening is shown in Figs 3 and 4. This jig 1 will be described further below. A knife to be sharpened in a conventional grinding machine is to be attached to and held by an adjustable clamp 2 of the jig 1. A problem with this is that the knife has to have a certain width in order to secure a proper holding by the clamp 2.

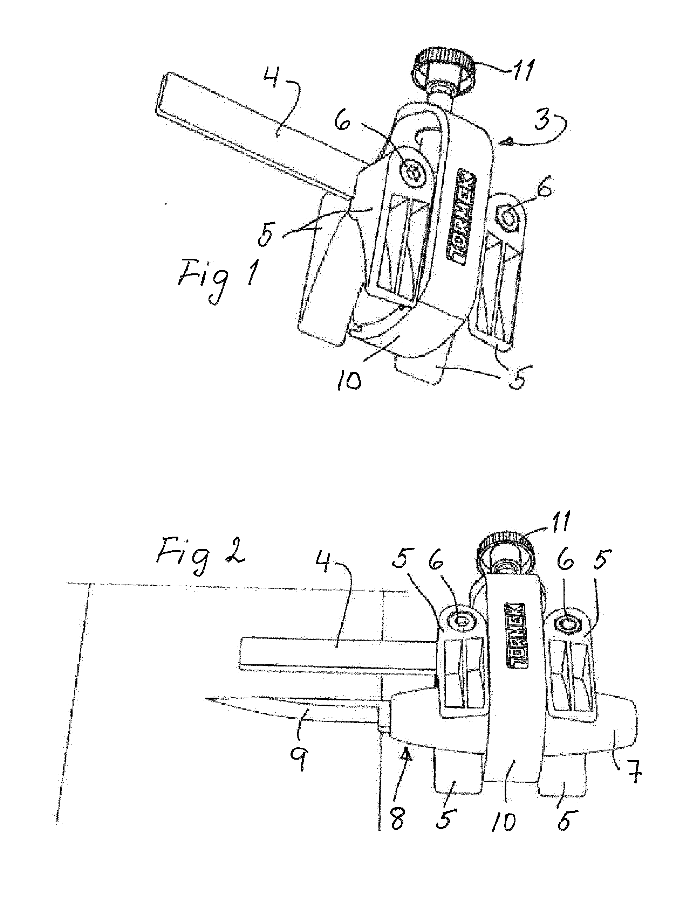

This problem will effectively be solved by a knife holder 3 to be described, first with reference to Fig 1.

The knife holder 3 is built-up around a flat bar 4. Permanently attached perpendicularly to this flat bar 4 are two pairs of jaws 5. The attachment of the jaws 5 to the flat bar 4 can be performed by means of screws 6 in through holes in the flat bar 4. The jaws 5 open out from the flat bar 4, so that a handle 7 of a knife 8 can be placed in the space between and supported by the jaws with its blade 9 pointing in the same direction as the flat bar 4, as is illustrated in Fig 2. All internal surfaces of the jaws 5 or jaw surfaces intended for cooperation with the knife handle 7 are concave in all directions, so that the knife handle bears against four points of the jaws 5.

A closed-loop yoke 10 is arranged between the two pairs of jaws 5. In its end portion facing away from the jaws 5 it is provided with a threaded hole for a screw 11 engaging the flat bar 4. Its opposite closed end portion is intended for engaging and holding the knife handle 7 against the jaws 5, when the screw 11 is tightened.

The result is a firm attachment and support of a knife handle of any size and shape at at least five points of the jaws 5 and the yoke 10, so that the knife blade 9 can be held in parallel with the flat bar 4. The jaws 5 and the yoke 10 accordingly together constitute means for holding a knife.

As the knife 8 is held by its handle 7, the width of the knife blade 9 is of no significance for the holding.

Fig 2 illustrates that the knife 8 can be attached to the knife holder 3, while the flat bar 4 is supported on a flat surface, for example a table. In this way the knife blade 9 will be parallel with the flat bar 4.

The knife holder 3 is intended for use with a conventional knife jig 1 in a way illustrated in Fig 3 and also Fig 4. This knife jig 1 is provided with an adjustable clamp 2 originally intended for clamping a knife to be sharpened. In its use together with the knife holder 3, however, the flat bar 4 is instead to be clamped and held by the clamp 2.

The knife jig 1 is provided with a screw 12 for adjusting the clamp width to the flat bar 4 and a tightening knob 13 for locking the clamp 2.

The knife jig 1 further has a rod-shaped handle 14 with an adjustable stop 15.

The per se known knife jig 1 has further features, which are not described, because they are of no importance for the understanding of the invention.

The use of the knife jig assembly 1, 3 for sharpening a knife 8 is illustrated in Fig 4.

The knife 8 is attached in the knife holder 3 as described above with the flat bar 4 as a reference. The knife holder 3 is then attached to the knife jig 1 by its flat bar 4 as described above. In this way it is secured that the knife 8 is properly positioned in the knife jig 1 and is later ground with an equally large grind bevel at both sides.

The knife jig assembly 1, 3 is placed in a conventional grinding machine 16 with a rotating grindstone 17. The grinding machine 16 is provided with a rod-shaped universal support 18, on which the handle 14 of the knife jig 1 is to rest with its stop 15 engaging the universal support 18.

The operation of the knife jig assembly 1, 3 for sharpening the knife 8 by the rotating grindstone 17 is virtually the same as for the conventional knife jig 1 and is accordingly not described in detail.

The tool to be sharpened is throughout the specification called a knife, but other similar edge tools can also be sharpened with the aid of the knife jig assembly according to the invention

Modifications are possible within the scope of the appended claims.

## Claims

1. A knife jig assembly (1, 3) for use in sharpening a knife (8) in a grinding machine (16), comprising a conventional knife jig (1) with a clamp (2) for clamping and holding an object,
**characterized by** a knife holder (3) with means (5, 10) for holding the knife (8) and with a flat rod (4) to be clamped by the clamp (2) of the knife jig (1).

2. An assembly according to claim 1, wherein the means (5, 10) for holding the knife (8) are two pairs of open jaws (5) attached to the flat rod (4) and a closed-loop yoke (10) between the jaws, the yoke being movable for engaging the knife (8).

3. An assembly according to claim 2, wherein surfaces of the jaws (5) intended for cooperation with the handle (7) of the knife (8) are concave in all directions.

4. An assembly according to claim 2, wherein the yoke (10) in a threaded hole is provided with a screw (11) for engagement with the flat rod (4).

## Patentansprüche

1. Messereinspannungsanordnung (1, 3) zur Verwendung beim Schärfen eines Messers (8) in einer Schleifmaschine (16), mit einer herkömmlichen Messereinspannung (1) mit einer Zwinge (2) zum Festklemmen und Halten eines Gegenstands,
**gekennzeichnet durch** einen Messerhalter (3) mit einer Einrichtung (5, 10) zum Halten des Messers (8) und mit einem **durch** die Zwinge (2) der Messereinspannung (1) festzuklemmenden flachen Stab (4).

2. Anordnung nach Anspruch 1, wobei die Einrichtung (5, 10) zum Halten des Messers (8) zwei Paare von offenen Klemmbacken (5) sind, die an dem flachen Stab (4) und einem geschlossenen Joch (10) zwischen den Klemmbacken angebracht sind, wobei das Joch zur Ineingriffnahme mit dem Messer (8) beweglich ist.

3. Anordnung nach Anspruch 2, wobei zum Zusammenwirken mit dem Griff (7) des Messers (8) bestimmten Flächen der Klemmbacken (5) in alle Richtungen konkav ausgebildet sind.

4. Anordnung nach Anspruch 2, wobei das Joch (10) in einer Gewindebohrung eine Schraube (11) zur Ineingriffnahme mit dem flachen Stab (4) aufweist.

## Revendications

1. Ensemble de gabarit pour (1, 3) destiné à être utilisé pour aiguiser un couteau (8) sur une machine à affûter (16), comprenant un gabarit classique pour couteau (1) avec une pince (2) pour serrer et maintenir un objet,
**caractérisé par** un porte-couteau (3) doté de moyens (5, 10) pour maintenir le couteau (8) et d'une tige plate (4) devant être serrée par la pince (2) du gabarit de couteau (1).

2. Ensemble selon la revendication 1, dans lequel les moyens (5, 10) pour maintenir le couteau (8) sont deux paires de mâchoires ouvertes (5) attachées à la tige plate (4) et un étrier formant une boucle fermée (10) entre les mâchoires, l'étrier étant mobile pour se mettre en prise avec le couteau (8).

3. Ensemble selon la revendication 2, dans lequel les surfaces des mâchoires (5) prévues pour coopérer avec le manche (7) du couteau (8) sont concaves dans toutes les directions.

4. Ensemble selon la revendication 2, dans lequel l'étrier (10) dans un orifice fileté est doté d'une vis (11) destinée à se mettre en prise avec la tige plate (4).
